# EUROPÄISCHE PATENTSCHRIFT

(11) **EP 1 581 802 B1**
(45) Veröffentlichungstag und Bekanntmachung des Hinweises auf die Patenterteilung: **10.12.2008**
(21) Anmeldenummer: 04700686.1
(22) Anmeldetag: 08.01.2004
(51) Int. Cl.: G01N 21/64, B07C 5/342

(54) **VERFAHREN UND VORRICHTUNG ZUR SELEKTION VON RECYCLINGGLAS**
METHOD AND DEVICE FOR THE SELECTION OF RECYCLING GLASS
PROCEDE ET DISPOSITIF DE TRI DE VERRES DE RECYCLAGE

(30) Priorität: 10.01.2003 DE 10300851; 08.07.2003 DE 10330972
(43) Veröffentlichungstag der Anmeldung: 05.10.2005
(73) Patentinhaber: Schott AG, 55122 Mainz (DE)
(72) Erfinder: ENGEL, Axel, 55218 Ingelheim (DE); DÖRING, Eckart, 55278 Dolgesheim (DE); HASPEL, Rainer, 67590 Monsheim (DE)
(74) Vertreter: Sawodny, Michael-Wolfgang
(86) Internationale Anmeldenummer: PCT/EP2004/000067
(87) Internationale Veröffentlichungsnummer: WO 2004/063729

(56) Entgegenhaltungen:
- AT-B- 398 537
- DE-A- 19 813 608
- DE-C- 4 339 822

## Beschreibung

Die Erfindung betrifft ein Verfahren und eine Vorrichtung zur Selektion von Recyclingglasstücken, insbesondere für den Werkstoffkreislauf qualitativ hochwertiger, sortenreiner Gläser.

Es ist bekannt, Glasmaterial, das für das Glasrecycling vorgesehen ist, nach Farben zu trennen. Dabei wird meist zwischen weißen, halbweißen, grünen und braunen Gläsern unterschieden. Ferner ist bekannt, eine derartige Selektion mit Zeilenkameras vorzunehmen, die mit Farbfiltern versehen sind. Meistens jedoch sind eine Nachsortierung, insbesondere bei verunreinigtem Weißglas, und gesonderte Sortierungsschritte zur Beseitigung von Keramiken, Steinen und Porzellan im Recyclinggut notwendig.

Eine Farbselektion von Gläsern ist ein geeignetes Verfahren für die Rückgewinnung von Glaswerkstoffen zur Herstellung von Gläsern unterer oder mittlerer Qualitätsstufe. Hochqualitative Gläser, insbesondere optische Gläser, dürfen meist nur eine geringe Menge eines nach dem Farbverfahren vorsortierten Recyclingglases enthalten, da hierbei die Glaszusammensetzung sehr präzise eingehalten werden muss, um gewünschte Glaseigenschaften zu erreichen. Eine rein auf den Farbeindruck beruhende Selektion reicht in den allermeisten Fällen nicht aus, um das Vorhandensein bestimmter, unerwünschter, Glaszuschlagsstoffe und Verunreinigungen zu erkennen.

Ferner ist für das Recycling von Floatglas bzw. Flaschenglas die Abtrennung von transparenten Glaskeramiken und bleihaltigem Kristallglas sowie bleihaltiger Fernsehgläser aus dem Recyclinggut deshalb wichtig, da als Folge einer Überschreitung einer bestimmten Verschmutzungsschwelle mit diesen Verunreinigungen z. B. ein Verstopfen der Dünnglasdüsen auftreten kann oder, im Falle von Verunreinigungen durch Fernsehglas, bestehende Grenzwerte für den Gehalt an Schwermetalloxiden, insbesondere Bleioxid überschritten werden könnten. Ein hieraus folgender Anlagenstillstand führt zu Produktionsausfällen sowie zu einem Absinken der Wiederverwertungsquote, bzw. ein hieraus hergestelltes Produkt wäre nicht verkaufsfähig.

Aus der JP 2000-246227 ist ein Selektionsverfahren für optische Gläser bekannt geworden, bei dem in erster Linie mit Hilfe eines Röntgenspektrums die Selektion nach Glasart und Glasqualität vorgenommen wird. Zwar ist aus der JP 2000-246227 auch bekannt geworden zur Grobklassifizierung von RecyclingGlasstücken Fluoreszenzmessungen einzusetzen, jedoch ist die Fluoresenzmessung gemäß der JP 2000-246227 lediglich dann geeignet eine Aussage betreffend die Glassorte zu treffen, wenn Sie in Kombination mit der Röntgenmessung eingesetzt wird, da gemäß der JP 2000-246227 alleine die Röntgenmessung eine hinreichende Aussage betreffend die Glasart und Glasqualität zulässt.

Nachteilig an dem in der JP2000-246227 beschrieben Verfahren ist zum einen, dass eine Vielzahl von Messschritten zur Durchführung des Selektionsverfahrens notwendig sind, zum anderen, dass stets zur Charakterisierung der Recyclingglasstücke eine Röntgenmessung eingesetzt werden muß. Röntgenmessungen haben den Nachteil, dass mit einer relativ hohen Intensität angeregt werden muß, um ein verwertbares Spektrum zu erhalten. Dies erfordert hohe Abschirmmaßnahmen für das Bedienpersonal. Auch wenn Abschirmmaßnahmen ergriffen werden, besteht das Problem, dass ein Rest an Strahlenbelastung stets verbleibt. Des weiteren ist die Röntgenmessung relativ zeitintensiv, so dass eine In-situ Sortierung, d. h. eine Sortierung beispielsweise an einem laufenden Fließband nicht möglich ist. Die Röntgenquellen zur Erzeugung von Röntgenstrahlung sind selbst sehr aufwendig und wegen häufiger Ausfälle nicht zuverlässig.

Ein Materialsortierverfahren, welches mit einem einzelnen Messschritt Rückschlüsse auf die Materialzusammensetzung erlaubt, ist durch die US 2001/0022830 A1 bekannt. Dabei werden aus einem

Röntgenfluoreszenzspektrum materialspezifische Informationen gewonnen. Ein auf einem Förderband transportierter Materialstrom wird mit einer Röntgenröhre bestrahlt, wobei es zu einer Fluoreszenzanregung kommt, die wiederum durch einen Röntgendetektor spektral analysiert wird. Nachteilig an einer derartigen Methode ist der hohe apparative und sicherheitstechnische Aufwand, der mit der Röntgentechnik verbunden ist. Des weiteren ist eine Fokussierung der Röntgenstrahlung mit einer abbildenden Optik und damit die Einschränkung der Beleuchtung auf kleine Einzelobjekte nicht möglich. Lediglich die Ausblendung von Röntgenstrahlen wäre möglich. Dies hat aber den Nachteil, das die Intensität der Röntgenstrahlen verringert wird, was wiederum eine längere Messzeit zur Folge hat. Bruchstücke von Recyclinggläsern, die typischerweise mit hoher Geschwindigkeit durch Selektionsanlagen laufen, sind daher mit diesem Verfahren nur schwierig in ihrer Qualität zu beurteilen, insbesondere wenn es sich dabei um kleine Recyclingglasstücke handelt.

DE-C-43 39 822 offenbart ein Verfahren mit den Merkmalen 1.1-1.4 des Anspruchs 1 bzw. eine Vorrichtung mit den Merkmalen 11.1-11.3 des Anspruchs 11.

Die bisher bekannten Verfahren zur Selektion von Recyclinggläsern erfüllen die an sie gestellten Anforderungen hinsichtlich der Qualität und Geschwindigkeit der Selektion nicht in gewünschtem Maße, insbesondere ist stets zur Charakterisierung der Einsatz von Röntgenstrahlung notwendig.

Der Erfindung liegt die Aufgabe zugrunde, die Nachteile des Standes der Technik zu überwinden und insbesondere ein Verfahren und eine Vorrichtung zur Verfügung zu stellen, welches es ermöglicht, auf eine in der Durchführung und im apparativem Aufwand einfache Art und Weise eine Selektion von Gläsern, insbesondere optischen und technischen Gläsern zu erreichen. Insbesondere soll mit dem Verfahren beziehungsweise der Vorrichtung eine Aussage bezüglich des Gehalts von unerwünschten Verunreinigungen und kritischen Zuschlagsstoffen in Recyclinggläsern bzw. Recyclingglasbruchstücken möglich sein. Es soll möglich sein, dass eine Messerfassung so schnell erfolgt, dass eine Sortierung beispielsweise an einem laufenden Band möglich ist. Des weiteren sollen aufwendige Schutzmaßnahmen vermieden werden. Das Verfahren und die Vorrichtung sollen zur Steigerung der Wiederverwertungsquote und damit zur Kostenreduktion bei der Glasherstellung führen. Weiterhin soll das Selektionsverfahren und die Vorrichtung in bezug auf die Selektionsgeschwindigkeit schnell genug sein, um in schnell laufende Materialfördersysteme integriert werden zu können.

Diese Aufgabe wird durch ein Verfahren mit den Merkmalen des Anspruchs 1 gelöst. Die Unteransprüche betreffen jeweils vorteilhafte Weiterbildungen.

Insbesondere ist es mit dem erfindungsgemäßen Verfahren und der erfindungsgemäßen Vorrichtung möglich alleine mit Hilfe der Anregung von Fluoreszenz-anregung bei wenigstens einer bestimmten Wellenlänge oder in wenigstens einem bestimmten Wellenlängenbereich bereits auf Glasart und Bestandteile eines einzelnen Glasstückes, insbesondere Recyclingglasstückes, zurückzuschließen. Das erfindungsgemäße Verfahren und die erfindungsgemäße Vorrichtung, die Strahlung anstelle von Röntgenstrahlung zur Selektion von Glasbruchstücken verwendet, ermöglicht eine praktisch instande Erfassung des Messsignals , dass lediglich durch die Aufnahmezeit und die Totzeit der Detektionseinheit begrenzt ist. Die Emissionszeit der detektierbaren Fluoreszenzstrahlung liegt typischerweise zwischen einer Nanosekunde und zehn Mikrosekunden.

Erfindungsgemäss handelt es sich bei der Anregung um eine Fluoreszenz anregung, also um eine Anregung bei der das Glas- oder Recyclingglasstück fluoresziert oder luminesziert.

Unter Glas- oder Recyclingglasstücken werden insbesondere Gläser und Glaskeramiken verstanden. Die Glas- oder Recyclingglasstücke können farblos, gefärbt, transparent, opake oder vollständig undurchsichtig sein. Ebenso werden die Begriffe Glasart und Bestandteile von Gläsern synonym für Glaskeramikart und Bestandteile von Glaskeramiken verwendet.

Die Anregung kann in einer besonderen Ausführungsform auch mit wenigstens zwei spektral unterschiedlichen Wellenlängen oder Wellenlängenbereichen erfolgen, die für eine bestimmte Glasart oder Bestandteile von Gläsern charakteristisch sind. Die Anregung mit wenigstens zwei Wellenlängen ermöglicht, dass auch bleihaltige Wertstoffe, die nicht Gläser sind, beispielsweise Kunststoffe von bleihaltigen Glas- oder Recyclinglasstücken unterschieden werden können. Dieses Verfahren ermöglicht auch die Unterscheidung von chemisch unterschiedlichen Glaszusammensetzungen. Ein Beispiel hierfür ist die Unterscheidung von Bleikristallglas, bleihaltigem Fernsehglas und bleihaltigen optischen Gläsern. Auch ist so die Unterscheidung von chemisch unterschiedlichen Glaskeramiken oder anderen hochschmelzenden Gläsern möglich.

Vorzugsweise erfolgt die Anregung der einzelnen Glas- oder Recyclingglasstücke mittels im wesentlichen monochromatischer Strahlung. Die Strahlung kann dabei monochromatisch erzeugt (z. B. Laser) aber auch durch geeignete Filter, Gitter etc. monochromatisiert werden.

Das Verfahren ist dazu geeignet eine Selektion der Glas- oder Recyclingglasstücke in Abhängigkeit von ihrem Bleigehalt durchzuführen. Eine Selektion der Glas- oder Recyclingglasstücke kann aber auch nach bleihaltigen Gläsern, wie Bleikristallgläsern, und anderen Gläsern, wie Float- bzw. Flaschengläsern, erfolgen.

Weiterhin eignet sich das Verfahren sehr gut zur Selektion von Glaskeramiken aus anderen Gläsern, wie Float- bzw. Flaschengläsern. Die Fluoreszenzanregung, zur Selektion von Glaskeramiken, insbesondere von Lithium-Aluminium-Silicat-Glaskeramiken, erfolgt bei einer der folgenden Wellenlängen: 450 nm ± 10 nm, 340 nm ± 10 nm oder 380 nm ± 10 nm.

Auch ist eine Selektion der Recyclingglasstücke nach bleihaltigen Gläsern, Glaskeramiken, borhaltigen Gläsern, wie Aluminoborosilicatgläsern und/oder anderen Gläsern, wie Float- bzw. Flaschengläsern, erfolgreich durchzuführen. Hochschmelzende Gläser wie Borosilikat-, Aluminosilikat- oder Boroaluminosilikatgläser lassen sich im Bereich von 400 bis 450± 10 nm anregen, die Detektion der Emission erfolgt bei 530 bis 700 nm± 10 nm.

Zur Anregung eignet sich eine UV-Dauerlichtquelle. Zur Wellenlängen- bzw. zur Wellenlängenbereichselektion eigen sich hier insbesondere, bevorzugt mindestens zwei, spektral unterschiedliche Filter.

Weiterhin eignen sich zur Anregung Laser, insbesondere UV-Laser, und/oder gepulste Laser, da hier eine monochromatische Anregungsquelle zur Verfügung stehen.

Das Sensorsystem besteht vorzugsweise aus mindestens zwei spektral unterschiedlichen Emissionsfiltern mit jeweils zugeordneten, die Lichtintensität messenden, Sensoren.

Weiterhin enthält das Sensorsystem vorzugsweise ein Spektrometer, insbesondere ein Spektrometer, und besonders bevorzugt ein Fluoreszenzspektrometer, das den gesamten Bereich der Emission eines Recyclingglasstücks erfasst.

Zur schnellen Sortierung ist es von Vorteil, wenn die Auswertung des Sensorsignals und die Selektion des zugehörigen Recyclingglasstücks automatisch vorgenommen wird.

Insbesondere um störende Einfüße der einzelnen Anregungs- und/oder Emissionswellenlängen oder -Wellenlängenbereiche zu vermeiden, kann die Anregung und/oder Emission mittels unterschiedlicher, zueinander gechoppter Wellenlängen oder gechoppter Wellenlängenbereiche erfolgen. Zum Choppen kann beispielsweise eine rotierende Lochscheibe als Chopper dienen. Gemäß Lexikon der Optik, herausgegeben von Heinz Haferkorn, 1990, S.57 wird unter Chopper ein Lichtzerhacker, beispielsweise eine rotierende Loch- oder Schlitzscheibe oder Segmentscheibe verstanden, mit der ein Lichtstrahl periodisch unterbrochen und somit die Lichtamplitude moduliert wird. Hiermit sind Frequenzen im kHz-Bereich erreichbar. Mit Hilfe der gechoppten Wellenlängen kann die Nachweisempfindlichkeit deutlich erhöht werden.

Um Fremdlicht noch weitergehend auszuschließen bzw. zu unterdrücken kann in einer besonders bevorzugten Ausführungsform vorgesehen sein, dass das System in einem abgedunkelten Raum, beispielsweise in einer lichtdicht abgeschlossenen Kammer oder Einhausung betrieben wird. Durch diese Maßnahme können Störimpulse durch Tageslicht weitgehend ausgeschlossen werden.

Besonders bevorzugt wird das System so ausgelegt, dass es in ein bestehendes System, beispielsweise eine bestehende Sortieranlage integriert werden kann. Hierdurch wird insbesondere Platz eingespart.

Um zu verhindern, dass durch eine Überlagerung des Messsignales durch das Anregungssignal eine Erkennung erschwert wird, ist es vorteilhaft Filter oder spektral auflösende CCD-Kameras als Detektoren für das Fluoreszenzlicht einzusetzen. Insbesondere sind derartige Filter oder spektral auflösende Kameras bei der Detektion von Glaskeramiken vorteilhaft.

Es hat sich weiterhin als vorteilhaft erwiesen, dass die einzelnen Recyclingglasstücke als im wesentlichen einlagiger Stoffstrom in eine Selektionseinheit geführt werden.

Vorzugsweise erfolgt die Selektion der jeweiligen Recyclinglasstücke mittels Druckluftimpulsen. Entsprechend weist eine erfindungsgemäße Vorrichtung vorzugsweise Druckluftdüsen zur Selektion des jeweiligen Recyclingglasstücks mittels Druckluftimpulsen auf.

Um eine bestimmte Glasart oder ein Zusammensetzungsbestandteil eines Recyclingglasstückes zu erkennen und zu selektieren, kann prinzipiell wie folgt vorgegangen werden:

Man bestimmt beispielsweise mittels eines Fluoreszenzspektrometers die jeweils charakteristische Anregungswellenlänge und die jeweils charakteristische Emissionswellenlänge. Um solch ein Glasstück zu erkennen und zu selektieren, ist es nunmehr nur noch notwendig, mit der bestimmten Anregungswellenlänge einzustrahlen und die bestimmte Emissionswellenlänge zu detektieren.

Neben dem Verfahren stellt die Erfindung auch eine Vorrichtung zur Verfügung, mit der auf besonders einfache Art und Weise Recyclingglasstücke selektiert werden können. Insbesondere eignet sich die Vorrichtung zur Durchführung des erfindungsgemäßen Verfahrens. Die Merkmale der Vorrichtung werden durch den Gegenstand von Anspruchs 11. gelöst. Die Unteransprüche betreffen jeweils vorteilhafte Weiterbildungen.

Mit Hilfe von Mitteln zur Anregung der einzelnen Recyclingglasstücke mittels elektromagnetischer Strahlung im Wellenlängenbereich von IR (Infrarot) bis Ultraviolett (UV) ist es möglich mit nur einer einzigen Messungsmethode, insbesondere der Fluoreszenz- bzw. der Lumineszenzanregung die Glasart zu selektieren.

In einer besonderen Ausgestaltung der Erfindung weist die Vorrichtung vorzugsweise Mittel zur Anregung mit wenigstens zwei spektral unterschiedlicher Wellenlängen oder Wellenlängenbereichen auf, die für eine bestimmte Glasart charakteristisch sind.

Eine Anregung dieser Fluoreszenz kann mit monochromatischem oder breitbandigem UV-Licht erfolgen, besonders bevorzugt ist eine Multifrequenzanregung mit mindestens zwei unterschiedlichen Wellenlängen vorgenommen. Die monochromatische Anregung beziehungsweise die Multifrequenzanregung anstelle der Breitbandanregung hat den Vorteil, dass das emittierte Fluoreszenzlicht eine für den jeweiligen gesuchten Zuschlagsstoff typische Charakteristik aufweist. Eine solche Charakteristik wird durch die übliche breitbandige UV-Anregung bei Fluoreszenzuntersuchungen durch die

Überlagerung unterschiedlicher Fluoreszenzeffekte überdeckt. Eine solche erfindungsgemäße Fluoreszenzanregung findet mit einem zum gesuchten Zuschlagsstoff angepassten Beleuchtungsspektrum statt.

Eine erfindungsgemäße Ausgestaltung des Verfahrens sieht vor, die spektrale Charakteristik des emittierten Fluoreszenzlichtes über jedem einzelnen Recyclingglasstück zu messen. In einer bevorzugten Ausführungsform wird aber nicht die komplette gemessene Charakteristik ausgewertet, sondern lediglich das Flächenintegral unter dem Emissionsspektrum in einem gewissen Spektralbereich. Die Auswahl der Frequenzen des Emissionsspektrums kann apparativ durch den Einsatz bestimmter Lampen, Monochromatoren oder durch Filtereinheiten mit jeweils zugeordneten Sensoren erfolgen. Dabei ist es möglich, dass die Sensoren punktuell messen, d. h. dass hierfür Photosensoren eingesetzt werden. In einer bevorzugten Ausführungsform werden jedoch eindimensionale Zeilensensoren bzw. zweidimensionale bildgebende Sensoren zur Detektion der jeweiligen Intensität einer selektierten Emissionsfrequenz verwendet. Besonders vorteilhaft ist es, wenn das gesamte Emissionsspektrum vermessen wird, wozu ein Spektrumanalysator eingesetzt wird. Das detektierte Emissionslicht weist bei der erfindungsgemäßen Lösung eine charakteristische spektrale Verteilung auf, die für Zuschlagsstoffe, wie etwa Blei, typisch ist. Sind Emissionslinien vorhanden, die nicht aus der Existenz des Zuschlagsstoffs herrühren, so ist aus dem Vergleich zu Emissionsmaxima, die dem Zuschlagstoff zugeordnet werden, eine detaillierte Aussage über den Anteil kritischer Verunreinigungen im untersuchten Recyclingglas zu treffen und damit eine gestufte Qualitätseinteilung durchzuführen.

Das erfindungsgemäße Verfahren beruht darauf, dass bei Bestrahlung des Glases mit Anregungslicht, die dadurch induzierte Fluoreszenz signifikante Unterschiede im UV- bis NIR-Bereich für bestimmte Inhaltsstoffe oder Bestandteile des Glases, insbesondere Verunreinigungen wie Blei, aufweist.

Werden in einer bevorzugten Ausführungsform weitgehend monochromatische Anregungswellenlängen verwandt, so können insbesondere falls die Anregungswellenlängen im UV-Bereich liegen beispielsweise anhand von Literaturdaten oder Voruntersuchungen der Verunreinigungstyp sehr einfach eindeutig klassifiziert werden. Dabei kann die Anregung kontinuierlich, sogenannte cw-Anregung, oder gepulst erfolgen. Diese Vorgehensweise ist insbesondere bei zwei Anregungswellenlängen von Vorteil.

Die Auswahl bzw. die Selektion bzw. die Sortierung des untersuchten, vereinzelten Glases kann entweder visuell oder mittels Detektor und parallel controllergesteuerten Signalverarbeitung erfolgen, wobei das Auftreten definierter Emissionen und/oder deren Koinzidenz den Schritt der Selektion bzw. der Sortierung auslöst. Beispielsweise können auf einem Förderband befindliche Glasstücke durch Fluoreszenzanregung beispielsweise im UV-Bereich untersucht werden. Für jedes einzelne Glasstück wird ein Fluoreszenzsignal aufgenommen und ausgewertet. Detektiert die Auswerteeinheit aufgrund des aufgenommenen Fluoreszenzsignals beispielsweise eine Koinzidenz, beispielsweise von rotem und blauem Fluoreszenzlicht bei Bestrahlung mit einer vorbestimmten Wellenlänge, so wird das Förderband gestoppt und das Glas manuell entnommen oder ein Greiferarm angesteuert, der das Glasstück vom Förderband entnimmt und einem Sortierbehälter zuführt. Auf diese Art und Weise ist sehr einfach eine Selektion in unterschiedliche Glassorten, d. h. eine Sortierung möglich.

In einer besonders vorteilhaften Ausführungsform der Erfindung wird die Selektion der Recyclingglasstücke in Abhängigkeit von ihrem Bleigehalt durchgeführt. Die Selektion kann aber auch in Abhängigkeit von anderen Elementen durchgeführt werden. Das Verfahren ist nicht nur auf die Selektion in Abhängigkeit vom Bleigehalt beschränkt.

In einer weiteren bevorzugten Ausführungsform der Erfindung wird beispielsweise transparente Glaskeramik, borhaltige Gläser und bleihaltiges Kristallglas sowie Fernsehglas im Recyclinggut detektiert und aussortiert.

Werden Glaskeramiken aussortiert, so wird vorzugsweise mit Wellenlängen von 450±10 nm, 340±10 nm oder 380±10 nm eine Fluroszenzanregung vorgenommen.

Werden borhaltige Gläser und/oder andere Gläser, wie Float- bzw. Flaschengläser aussortiert, so erfolgt die Fluoroszenzanregung bevorzugt im Bereich von 400 bis 450±10 nm und die Detektion der Emission bei 530 bis 700±10 nm.

Die Erfindung ist anhand der Zeichnungen nachfolgend näher erläutert. Darin ist im Einzelnen Folgendes dargestellt:
- Figur 1 a-c: zeigen verschiedene Ausführungsformen von Selektionseinrichtungen für Recyclingglasstücke in schematischer Ansicht, wobei das angewandte Selektionsverfahren verdeutlicht wird;
- Figur 2: zeigt Emissionsspektren für Trichterglas und Schirmglas für verschiedene Anregungswellenlängen von 254, 302 und 365 nm
- Figur 3: zeigt Emissionsspektren für Trichterglas und Schirmglas für Anregungswellenlängen von 340 nm und 380 nm
- Figur 4: zeigt Emissionsspektren für Floatglas, Bleikristall und Glaskeramik für verschiedene, zur Selektion geeignete Anregungswellenlängen

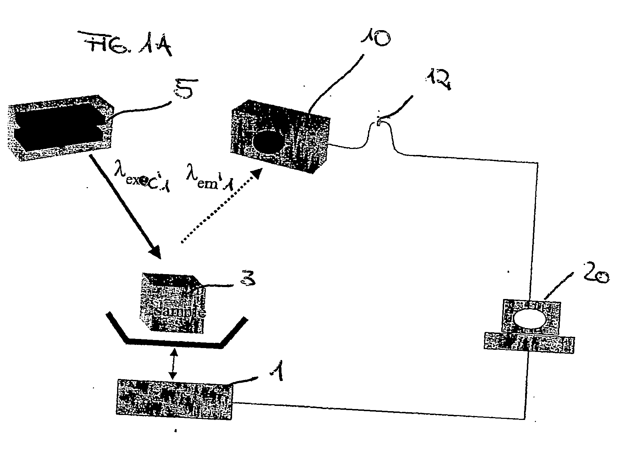

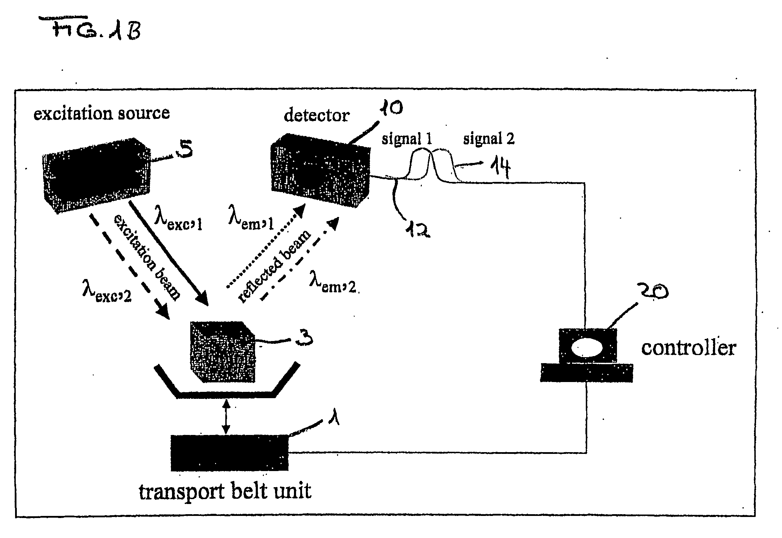

In den Figuren 1 a-c ist der prinzipielle Aufbau einer Sortieranlage, bei der das erfindungsgemäße Selektionsverfahren beispielsweise zur Sortierung von unterschiedlichen Glassorten eingesetzt wird gezeigt.

Auf einem Transportband 1 werden die einzelnen Glasstücke 3 transportiert. In Figur 1 a ist die Anregung der Fluoreszenz bei den durchlaufenden Glasstücken 3 mit einer Anregungswellenlänge λ _{exec'1}, die von einer Anregungslichtquelle 5 zur Verfügung gestellt wird, gezeigt. Die Fluoreszenzstrahlung bestimmter Wellenlänge, die vom Glasstück reflektiert wird, ist mit einer Fluoreszenzwellenlänge λ _{em'1} bezeichnet. Das Fluoreszenzsignale wird bei dieser Wellenlängen von einem Detektor 10 aufgenommen. Das Signal der ersten Fluoreszenzwellenlänge λ _{em'1} ist mit 12 bezeichnet. Das Signal wird einer Auswerteeinheit 20, beispielsweise einem Steuergerät, zugeführt. In Abhängigkeit vom aufgenommenen Signal 12 wird dann beispielsweise das Transportband 1 angesteuert. Wird festgestellt, dass eine Emissionswellenlängen, die einer Glassorte zugeordnet werden, vorliegt, so wird beispielsweise ein Koinzidenzsignal gesetzt und das Förderband 1 angehalten. Das Glas kann dann vom Förderband 1 entnommen und einem Sortierbehälter zugeführt werden. Auf diese Art und Weise wird im Sortierbehälter sortenreines Glas einer Glassorte erhalten, das wiederverwendet werden kann.

Alternativ zum Zuführen mittels eines Transportbandes und Anhalten desselben zur Selektion wäre es auch möglich einen frei fallenden Glasstrom vorzusehen und beispielsweise Düsen derart anzusteuern, die durch einen Druckstoß aus dem Glasstrom, der sich im freien Fall befindet, das entsprechende Glasstück 3 abgelenkt wird und einem Sortierbehälter zugeführt wird.

Alternativ wäre es auch möglich die Glasscherben zu vereinzeln und als Strom von Einzelscherben der Detektion zuzuführen und z. B. Klappen so anzusteuern, dass der Weg der Scherben selektiv geändert wird und damit die Scherben verschiedenen Gesamtheiten zugeführt werden.

In Figur 1b ist eine abgewandelte Ausführungsform der Erfindung gezeigt, bei der die Glasstücke 3 mit Licht einer ersten Anregungswellenlänge λ _{exec'1} und einer zweiten Anregungswellenlänge λ _{exec'2} von einer Anregungslichtquelle 5 bestrahlt werden.

Gleiche Bauteile in den Figuren 1a und 1b werden mit denselben Bezugsziffern gekennzeichnet.

Die Fluoreszenzstrahlung bestimmter Wellenlänge, die vom Glasstück reflektiert wird, ist mit einer ersten Fluoreszenzwellenlänge λ _{em'1} und einer zweiten Fluoreszenzwellenlänge λ _{em'2} bezeichnet. Die Fluoreszenzsignale werden bei diesen beiden Wellenlängen von einem Detektor 10 aufgenommen. Das Signal der ersten Fluoreszenzwellenlänge λ _{em'1} ist mit 12 bezeichnet, das Signal der zweiten Fluoreszenzwellenlänge λ _{em'2} mit 14. Die beiden Signale werden einer Auswerteeinheit 20, beispielsweise einem Steuergerät, zugeführt. In Abhängigkeit der aufgenommenen Signale 12, 14 wird dann das Transportband 1 angesteuert. Wird beispielsweise festgestellt, dass zwei Emissionswellenlängen, die einer Glassorte zugeordnet werden, vorliegen, so wird ein Koinzidenzsignal gesetzt und das Förderband angehalten. Das Glas kann dann vom Förderband entnommen und einem Sortierbehälter zugeführt werden. Auf diese Art und Weise wird im Sortierbehälter sortenreines Glas einer Glassorte erhalten, das wiederverwendet werden kann. Die Ausgabe eines Koinzidenzsignals ist nicht an die Detektion von zwei Emissionssignalen gebunden, auch andere Konstellationen, die ein Koinzidenzsignal und damit einen Sortier- bzw. Selektionsvorgang auslösen sind denkbar, beispielsweise das Vorhandensein von drei Emissionswellenlängen oder auch nur einer Emissionswellenlänge, ohne dass von der Erfindung abgewichen wird.

In Figur 1c ist eine zu den Ausführungsformen in den Figuren 1a und 1b alternative Ausführungsform der Erfindung gezeigt. Bei der in Figur 1c gezeigten Anlage handelt es sich um Glassortieranlage, bei der die zu recycelnden Glasstücke 303 über einen Trichter 304 auf ein auf eine Schüttgutbahn 305 gegeben werden. Die Glasstücke 303 rutschen auf der Schüttgutbahn 305 bis zu einer Kante 310. Wenn die Glasstücke 313 über die Kante 310 der Schüttgutbahn hinausgleiten, befinden sie sich nach der Kante 310 im freien Fall beispielsweise in einem sogenannten Glasstrom 312. Die im Glasstrom befindlichen Glas- oder Recyclingglasstücke werden über eine Lichtquelle, beispielsweise eine UV-Lichtquelle 350 zur Fluoreszenz angeregt. Je nachdem, ob es sich um beispielsweise bleihaltige Gläser handelt oder nicht tritt Fluoreszenz auf. Die emittierte Fluoreszenzstrahlung wird beispielsweise mittels einer im Durchlicht installierten CCD-Kamera 352 ortsaufgelöst detektiert. Wird eine Fluoreszenz für ein bestimmtes Recyclingglasstück aus dem Glasstrom detektiert, so kann mittels beispielsweise eines Düsenbalkens 354 umfassend eine Vielzahl von in Reihe angeordneten Düsen 356 ortsaufgelöst einer dieser Düsen angesteuert werden und das entsprechende bleihaltige Recyclingglasstück aus der Bahn abgelenkt werden, so dass es in einen bestimmten Sortierbehälter 330 beispielsweise für bleihaltiges Recyclingglas fällt. Der besondere Vorteil dieser Vorrichtung ist, dass die erfindungsgemäße Fluoreszenzmesseinrichtung zusätzlich zu anderen Erkennungssystemen für bestimmte Glasssorten, beispielsweise Farberkennungssystemen angeordnet werden können und auch eine Integration in bestehende Produkttrennanlagen beispielsweise Glassortierstufen mit Farbsortiereinrichtungen möglich ist.

Nachfolgenden sollen Ausführungsbeispiele der Erfindung näher beschrieben werden.

Beispielsweise ist es für das Recycling von Schirmglas, beispielsweise von Glas von Fernseh- oder Computerbildschirmen, notwendig, eine eindeutige Trennung der Gläser in bleihaltiges und nicht bleihaltiges Glas vorzunehmen. Gelangt nämlich bleihaltiges Glas in den Prozesskreislauf zur Herstellung von Schirmglas, so führt dies zu einem Produktionsstillstand.

Bei einer erfindungsgemäßen Sortieranlage wird beispielsweise vereinzeltes Produktionsmaterial in Scherbenform in Reflexion vermessen. Als Detektor wurde ein Fluoreszenzspektrometer Flourolog 3 (FL 3) der Firma Jobin Yvon eingesetzt. Die Anregung erfolgte schmalbandig mit Hilfe von Anregungslampen bei 254, 302, 340, 380 und 365 nm. Unter schmalbandig wird verstanden, dass die volle Bandbreite des Anregungslichtes bei ca. 1 nm lag. Das Fluoreszenzlicht wurde in Reflexion detektiert.

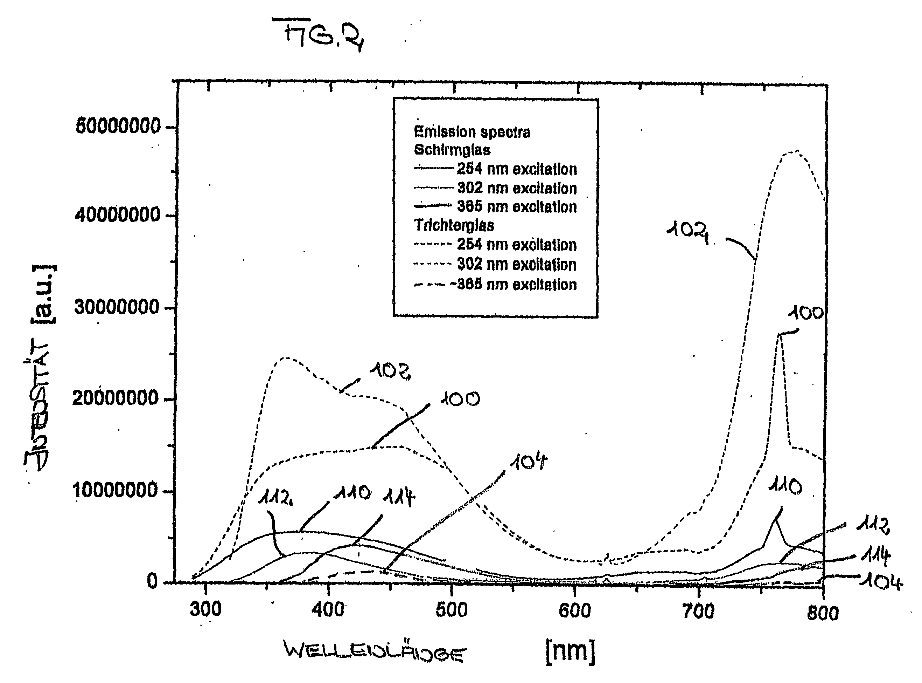

In Figur 2 sind die Emissionsspektren für Schirm- und Trichterglas bei Anregung mit 254, 302 und 365 nm gezeigt. Es zeigt sich, dass das bleihaltige Trichterglas bei Anregung mit Licht im Wellenlängenbereich 250 bis 300 nm sehr stark im Blauen, d. h. im Wellenlängenbereich von 330 bis 450 nm, Fluoreszenzlicht emittiert. Die Fluoreszenz beim Schirmglas ist hier deutlich schwächer. Die Emissionskurve für Trichterglas bei Anregung bei 254 nm ist mit 100 bezeichnet, für Trichterglas bei Anregung bei 302 nm mit 102 und bei 365 nm mit 104. Die Emissionskurve für Schirmglas bei Anregung bei 254 nm ist mit 110 bezeichnet, für Trichterglas bei Anregung bei 302 nm mit 112 und bei 365 nm mit 114.

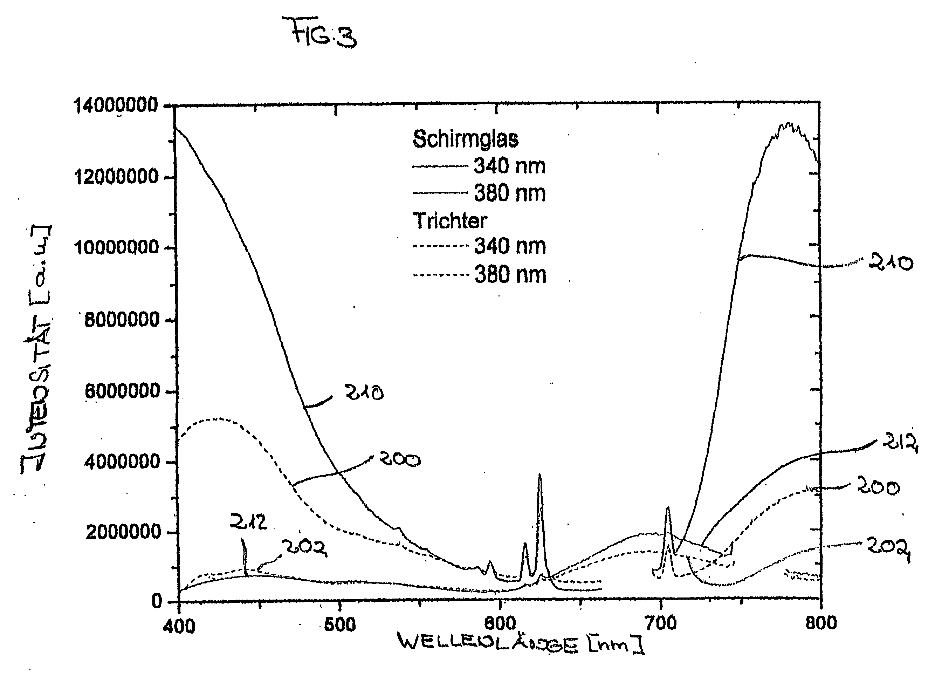

In Figur 3 sind die Emissionsspektren für Schirm- und Trichterglas bei Anregung mit 340 nm und 380 nm gezeigt. Es zeigt sich, dass das Maximum der Emissionsspektren im Roten liegt. Dies liegt darin begründet, dass bei Verwendung von längeren Anregungswellenlängen die Fluoreszenz ebenfalls ins Langwellige verschoben ist. Zum anderen wird die auf Barium zurückzuführende Fluoreszenz beobachtet. Die Emissionskurve für Trichterglas bei Anregung bei 340 nm ist mit 200 bezeichnet, für Trichterglas bei Anregung bei 380 nm mit 202. Die Emissionskurve für Schirmglas bei Anregung bei 340 nm ist mit 210 bezeichnet, für Schirmglas bei Anregung bei 380 nm mit 212.

Bevorzugt wird zur Sortierung Anregungslicht der Wellenlängen 254 nm und 380 nm eingesetzt. Die Anregung bei 254 nm zeigt sicher die blaue Emission, die durch Blei verursacht ist. So lässt sich Trichterglas identifizieren. Die Emissionsleistung einer Anregungslampe kann beispielsweise 10 W betragen und das Spektrum der Lampe durchaus breitbandig sein, da auch bei 300 nm noch ausreichend blaue Fluoreszenz zu sehen ist. Bei Anregung mit 254 nm ist auch eine Emission im Roten zu beobachten.

Bei Anregung mit 380 nm wird die rote Fluoreszenz maximal emittiert, eine Fluoreszenz im Blauen ist auch für das Trichterglas nicht zu beobachten. Die rote Fluoreszenz ist auf das Glas selbst und das darin enthaltene Barium zurückzuführen. Die Anregung mit rotem Licht bei 380 nm sollte schmalbandig im Bereich 380 nm ± 10 nm erfolgen. Untersucht man nunmehr die Emissionsspektren beispielsweise bei Anregung mit 254 nm und 380 nm, so lässt sich Schirm und Trichterglas eindeutig voneinander trennen, da bei 254 nm Anregung bleihaltiges Trichterglas durch die blaue und die rote Fluoreszenz identifiziert werden kann. Bei Anregung mit 380 nm kann exklusiv Schirmglas nachgewiesen werden, wenn bei einer zuvor erfolgten Anregung bei 254 nm keine blaue Fluoreszenz detektiert wurde. Zur erfindungsgemäßen Selektion bspw. von bleihaltigem Glas wäre es gemäß der Erfindung auch möglich, alleine bspw. bei 254 nm anzuregen. Wird aber zusätzlich noch bei einer zweiten Wellenlänge wie in dem vorgenannten Ausführungsbeispiel beispielsweise bei380 nm ein Anregung vorgenommen, so ,kann beispielsweise besonders gut und auf einfache Art und Weise sichergestellt werden, dass die blaue Fluoreszenz bei 254 nm vom Blei im Glas, insbesondere im Trichterglas herrührt und nicht beispielsweise von Bleiverunreinigungen in anderen Substanzen Dies ist besonders wichtig, wenn die Erfindung nicht in reinen Glassortierstufen bzw. -anlagen wie sie beispielsweise in Figur 1c gezeigt ist, eingesetzt wird, sondern beispielsweise in Anlagen, in denen eine Vorsortierung in Glasrohstoffe noch nicht erfolgt ist, sondern auch andere Abfallstücke, wie Kunststoffe etc. zugeführt werden, wie z. B. in den Anlagen gemäß Figuren 1a und 1b. Fluoreszenz bei 380 nm tritt ausschließlich bei Glas auf und ist auf die Fluoreszenz von Barium zurückzuführen, bei anderen Substanzen wie Schmutz, Kitt oder Kleber tritt keine Fluoreszenz auf.

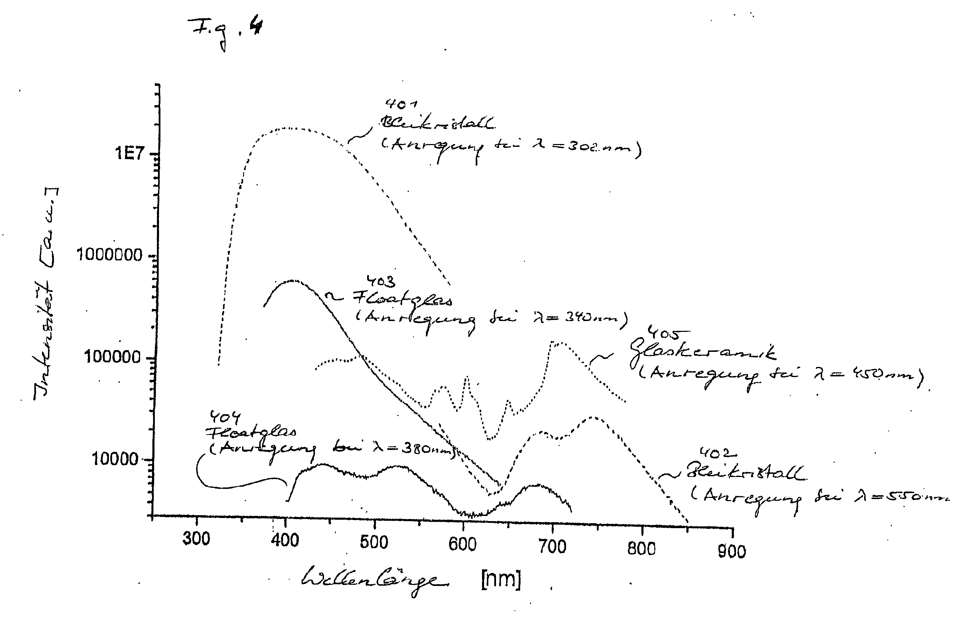

Ein weiteres Ausführungsbeispiel der Erfindung zur Abtrennung von Bleikristall und Glaskeramik von Float- bzw. Flaschenglas ist in Figur 4 anhand der Emissionsspektren dieser Komponenten bei einer Anregung mit spezifischen, für die Selektion geeigneten Wellenlängen gezeigt.

Bei einer Anregungsstrahlung auf Bleikristall im Bereich von 300 nm, d. h.d. h. mit einer Wellenlänge von vorzugsweise 300 nm ± 10 nm, entsteht eine charakteristische breitbandige Fluoreszenzemission in einem Wellenlängenbereich von 350 - 450 nm, welche in Figur 4 mit dem Bezugszeichen 401 bezeichnet ist. Eine alternative Detektion von Bleikristall kann mit einer Anregungswellenlänge bei 550 nm ± 10 nm durchgeführt werden. Hieraus folgt eine charakteristische Emission in einem Wellenlängenbereich von 670 - 740 nm. In Figur 4 steht für dieses Emissionsspektrum das Bezugszeichen 402.

Der Gutstoff des Recyclingverfahrens, Floatglas bzw. Flaschenglas, kann über eine selektive Anregung entweder bei einer Wellenlänge von 340 nm ± 10 nm oder bei einer Wellenlänge von 380 nm ± 10 nm als mittelstarke und breitbandige Fluoreszenz bei 420 nm bzw. 670 nm detektiert werden. Hierzu korrespondieren die Bezugszeichen 403 und 404 in Figur 4.

Zur Selektion unerwünschter Glaskeramik, wie etwa Robax, kann eine ausgeprägte Fluoreszenz bei 700 nm mittels einer Anregung bei einer Wellenlänge von 450 nm ± 10 nm bewirkt werden. Das entsprechende Emissionsspektrum ist in Figur 4 mit dem Bezugszeichen 405 bezeichnet.

Mit dem erfindungsgemäßen Verfahren können Sortieranlagen wie beispielhaft in Figur 1 gezeigt für Schirm- und Trichterglas oder auch andere Glassorten, bzw. zum Aussortieren von Bleikristall und Glaskeramik betrieben werden. Insbesondere ist es mit dem erfindungsgemäßen Verfahren beziehungsweise mit der erfindungsgemäßen Anlage möglich bei Glassortierstufen bzw. Glassortieranlagen mit einem Glasstrom aus Glasteilchen im freien Fall oder beim Gleiten über eine schiefe Ebene, eine erfindungsgemäße Vorrichtung in eine konventionelle Anlage mit Farbsortierung zu integrieren, bzw. eine derartige Anlage umzurüsten. Statt oder zusätzlich zur Lichtquelle für die Farbsortierung, die z. B. eine Leuchtstoffröhre ist kann eine Fluoreszenzlichtquelle vorgesehen sein. Die Detektion kann über eine bereits vorhandene CCD-Kamera, die zur Farbsortierung eingesetzt wird, beispielsweise mit Hilfe von Filtern erfolgen.

## Patentansprüche

1. Verfahren zur Selektion von Glas und/oder Recyclingglasstücken mit den folgenden Merkmalen:
1.1 Führen der einzelnen Glas- und/oder Recyclingglasstücke in eine Selektionseinheit,
1.2 Anregung der einzelnen Glas- und/oder Recyclingglasstücke mittels elektromagnetischer Strahlung im Wellenlängenbereich von ultraviolett bis infrarot, wobei die Anregung mit wenigstens einer bestimmten Wellenlänge oder einem bestimmten Wellenlängenbereich erfolgt, die/der für eine bestimmte Glasart oder Bestandteile von Gläsern charakteristisch ist,
1.3 Detektion der von den einzelnen Glas- und/oder Recyclingglasstücken emittierten, für bestimmte Glasarten oder Bestandteile von Gläsern charakteristischen Strahlung mittels eines optischen oder optoelektronischen Sensorsystems,
1.4 Rückschluss aufgrund der emittierten Fluoreszenzstrahlung auf Glasart oder Bestandteil des einzelnen Glas- und/oder Recyclingglasstücks und
1.5 Selektion des jeweiligen Glas- und/oder Recyclingglasstücks, wobei das Sensorsystem aus mindestens zwei spektral unterschiedlichen Emissionsfiltern mit jeweils zugeordneten, die Lichtintensität messenden, Sensoren besteht.
1.6.1 wobei eine Selektion der Glas- und/oder Recyclingglasstücke nach Glaskeramiken und anderen Gläsern, wie Float- bzw. Flaschengläsern, durchgeführt wird und die Fluoreszenzanregung bei einer der folgenden Wellenlängen vorgenommen wird: 450 nm ± 10 nm, 340 nm ± 10 nm oder 380 nm ± 10 nm
oder
1.6.2 wobei eine Selektion der Glas- und/oder Recyclingglasstücke nach bleihaltigen Gläsern, Glaskeramiken, borhaltigen Gläsern, wie Aluminoborosillcatgläsern und/oder anderen Gläsern, wie Float - bzw. Flaschengläsern, durchgeführt wird und die Fluoreszenzanregung im Bereich von 400 bis 450 ± 10 nm und die Detektion der Emission bei 530 bis 700 nm ± 10 nm erfolgt.

2. Verfahren nach Anspruch 1, **dadurch gekennzeichnet, dass** die Anregung mit wenigstens zwei spektral unterschiedlichen Wellenlängen oder Wellenlängenbereichen erfolgt, die für eine bestimmte Glasart oder Bestandteile von Gläsern charakteristisch sind.

3. Verfahren nach wenigstens einem der Ansprüche 1 bis 2, **dadurch gekennzeichnet, dass** die Anregung der einzelnen Glas- und/oder Recyclingglasstücke mittels im wesentlichen monochromatischer Strahlung erfolgt.

4. Verfahren nach wenigstens einem der Ansprüche 1 bis 3, **dadurch gekennzeichnet, dass** die Anregung durch eine UV-Dauerlichtquelle, insbesondere mindestens zwei spektral unterschiedlichen Filtern, erfolgt.

5. Verfahren nach wenigstens einem der Ansprüche 1 bis 3, **dadurch gekennzeichnet, dass** die Anregung durch einen Laser, insbesondere einen UV-Laser erfolgt.

6. Verfahren nach Anspruch 5, **dadurch gekennzeichnet, dass** die Anregung durch einen gepulsten Laser erfolgt.

7. Verfahren nach einem der Ansprüche 1 bis 6, **dadurch gekennzeichnet, dass** die Auswertung des Sensorsignals und die Selektion des zugehörigen Recyclingglasstücks automatisch vorgenommen wird.

8. Verfahren nach einem der Ansprüche 1 bis 7, **dadurch gekennzeichnet, dass** die Anregung und/oder Emission mittels unterschiedlicher, zueinander gechoppter Wellenlängen erfolgt.

9. Verfahren nach wenigstens einem der Ansprüche 1 bis 8, **dadurch gekennzeichnet, dass** die einzelnen Glas und/oder Recyclingglasstücke als im wesentlichen einlagiger Stoffstrom in eine Selektionseinheit geführt werden.

10. Verfahren nach wenigstens einem der Ansprüche 1 bis 9, **dadurch gekennzeichnet, dass** die Selektion der jeweiligen Glas- und/oder Recyclinglasstücke mittels Druckluftimpulsen erfolgt.

11. Vorrichtung zur Selektion von Glas- und/oder Recyclingglasstücken mit den folgenden Merkmalen:
11.1 Mitteln zum Führen der einzelnen Glas- und/oder Recyclingglasstücke in eine Selektionseinheit;
11.2 Mitteln zur Anregung der einzelnen Glas- und/oder Recyclingglasstücke mittels elektromagnetischer Strahlung im Wellenlängenbereich von ultraviolett bis infrarot, wobei die Anregung mit wenigstens einer bestimmten Wellenlänge oder einem bestimmten Wellenlängenbereich erfolgt, die/der für bestimmte Glasarten oder Bestandteile von Gläsern charakteristisch ist,
11.3 optisches oder optoelektronisches Sensorsystem zur Detektion und Auswertung der von den einzelnen Glas- und/oder Recyclingglasstücken emittierten für eine Glasart oder einen Bestandteil des einzelnen Recyclingglasstücks charakteristischen Strahlung,
11.4 Mitteln zur Selektion des jeweiligen Glas- und/oder Recyclingglasstücks,
wobei das Sensorsystem aus mindestens zwei spektral unterschiedlichen Emissionsfiltern mit jeweils zugeordneten, die Lichtintensität messenden, Sensoren besteht,
11.5.1 wobei eine Selektion der Glas- und/oder Recyclingglasstücke nach Glaskeramiken und anderen Gläsern, wie Float- bzw. Flaschengläsern, durchgeführt wird und die Fluoreszenzanregung bei einer der folgenden Wellenlängen vorgenommen wird: 450 nm ± 10 nm, 340 nm ± 10 nm oder 380 nm ± 10 nm
oder
11.5.2 wobei eine Selektion der Glas- und/oder Recyclingglasstücke nach bleihaltige Gläsern, Glaskeramiken, borhaltigen Gläsern, wie Aluminoborosilicatgläsern und/oder anderen Gläsern, wie Float- bzw. Flaschengläsern, durchgeführt wird und die Fluoreszenzanregung im Bereich von 40 bis 450 ± 10 nm und die Detektion der Emission bei 530 bis 700 nm ± 10 nm erfolgt.

12. Vorrichtung nach Anspruch 11, **dadurch gekennzeichnet, dass** die Vorrichtung Mittel zur Anregung mit wenigstens zwei spektral unterschiedlicher Wellenlängen oder Wellenlängenbereichen aufweist, die für eine bestimmte Glasart charakteristisch sind.

13. Vorrichtung nach Anspruch 11 oder 12, **dadurch gekennzeichnet, dass** die Mittel zur Selektion des jeweiligen Glas- und/oder Recyclingglasstücks wenigstens eine Druckluftdüse zur Selektion des jeweiligen Glas- und/oder Recyclingglasstücks mittels Druckluftimpuls aufweist.

14. Vorrichtung gemäß einem der Ansprüche 11 bis 13, **dadurch gekennzeichnet, dass** die Mittel zum Führen der einzelnen Glas- und/oder Recyclinglasstücke in die Selektionseinheit eine Trichter und eine Schüttgutrampe umfassen, so dass die einzelnen Glasstücke einen Glasstrom im freien Fall ergeben, der in die Selektionseinheit gelangt.

15. Vorrichtung gemäß einem der Ansprüche 11 bis 13, **dadurch gekennzeichnet, dass** Vorrichtung des weiteren eine Farbsortierelnrichtung umfasst.

16. Vorrichtung gemäß Anspruch 15, **dadurch gekennzeichnet, dass** die Farbsortiereinrichtung als Lichtquelle eine Leuchtstoffröhre umfasst und die Mittel zur Anregung einzelner Glas- und/oder Recyclinglasstücke eine UV-Lampe.

17. Vorrichtung nach einem der Ansprüche 11 bis 16, **dadurch gekennzeichnet, dass** das Sensorsystem eine ortsaufgelöste CCD-Kamera umfasst.

18. Vorrichtung nach einem der Ansprüche 11 bis 17, **dadurch gekennzeichnet, dass** die Vorrichtung Mittel zur Unterdrückung von Falschlicht umfassen.

19. Vorrichtung nach Anspruch 18, **dadurch gekennzeichnet, dass** die Mittel zur Falschlichtunterdrückung Lichtzerhackeinrichtungen und/oder Einhausungen umfassen.

## Claims

1. A method for the selection of glass and/or recycling glass pieces, having the following features:
1.1. guiding the individual glass and/or recycling glass pieces to a selection unit;
1.2. excitation of the individual glass and/or recycling glass pieces by means of electromagnetic radiation in the wavelength range from ultraviolet to infrared, with the excitation occurring with at least one particular wavelength or a particular wavelength range which is characteristic for a specific type of glass or components of glass;
1.3. detection of the radiation emitted by the individual glass and/or recycling glass pieces which is characteristic for specific types of glass or components of glass by means of an optical or optoelectronic sensor system;
1.4. drawing a conclusion about the glass type or component of the individual glass and/or recycling glass piece based on the emitted fluorescence radiation, and
1.5. selection of the respective glass and/or recycling glass piece, with the sensor system consisting of at least two emission filters which are spectrally different and comprise associated sensors which measure the luminous intensity;
1.6.1 with a selection of the glass and/or recycling glass pieces being performed according to glass ceramics and other glasses such as float or bottle glasses, and the fluorescent excitation being made at one of the following wavelengths: 450 nm ± 10 nm, 340 nm ± 10 nm or 380 nm ± 10 nm; or
1.6.2 with a selection of the glass and/or recycling glass pieces being performed according to lead-containing glasses, glass ceramics, boronic glasses such as aluminoborosilicate glasses and/or other glasses such as float or bottle glasses, and the fluorescent excitation being made in the range of 400 to 450 nm ± 10 nm and the detection of the emission at 530 to 700 nm ± 10 nm.

2. A method according to claim 1, **characterized in that** the excitation occurs with at least two spectrally different wavelengths or wavelength ranges which are characteristic for a specific type of glass or components of glasses.

3. A method according to at least one of the claims 1 to 2, **characterized in that** the excitation of the individual glass and/or recycling glass pieces occurs by means of a substantially monochromatic radiation.

4. A method according to at least one of the claims 1 to 3, **characterized in that** the excitation occurs by an ultraviolet steady light source, especially at least two spectrally different filters.

5. A method according to at least one of the claims 1 to 3, **characterized in that** the excitation occurs by a laser, especially an ultraviolet laser.

6. A method according to claim 5, **characterized in that** the excitation occurs by a pulsed laser.

7. A method according to one of the claims 1 to 6, **characterized in that** the evaluation of the sensor signal and the selection of the associated recycling glass piece is performed automatically.

8. A method according to one of the claims 1 to 7, **characterized in that** the excitation and/or emission occurs by means of different wavelengths which are chopped towards each other.

9. A method according to at least one of the claims 1 to 8, **characterized in that** the individual glass and/or recycling glass pieces are guided as a substantially single-layer stream of material to a selection unit.

10. A method according to at least one of the claims 1 to 9, **characterized in that** the selection of the respective glass and/or recycling glass pieces occurs by means of compressed-air pulses.

11. An apparatus for the selection of glass and/or recycling glass pieces, having the following features:
11.1. means for guiding the individual glass and/or recycling glass pieces to a selection unit;
11.2. means for excitation of the individual glass and/or recycling glass pieces by means of electromagnetic radiation in the wavelength range from ultraviolet to infrared, with the excitation occurring with at least one particular wavelength or a particular wavelength range which is characteristic for a specific type of glass or components of glass;
11.3. an optical or optoelectronic sensor system for the detection and evaluation of the radiation which is emitted by the individual glass and/or recycling glass pieces or is characteristic for a type of glass or a component of the individual recycling glass piece;
11.4. means for the selection of the respective glass and/or recycling glass piece, with the sensor system consisting of at least two spectrally different emission filters with respectively associated sensors measuring the luminous intensity,
11.5.1 with a selection of the glass and/or recycling glass pieces being performed according to glass ceramics or other glasses such as float or bottle glasses, and the fluorescent excitation being performed at one of the following wavelengths:
450 nm ± 10 nm, 340 nm ± 10 nm or 380 nm ± 10 nm,
or
11.5.2 with a selection of the glass and/or recycling glass pieces being performed according to lead-containing glasses, glass ceramics, boronic glasses such as aluminoborosilicate glasses and/or other glasses such as float or bottle glasses, and the fluorescent excitation being made in the range of 400 to 450 nm ± 10 nm and the detection of the emission at 530 to 700 nm ± 10 nm.

12. An apparatus according to claim 11, **characterized in that** the apparatus comprises means for the excitation with at least two spectrally different wavelengths or wavelength ranges which are characteristic for a specific type of glass.

13. An apparatus according to claim 11 or 12, **characterized in that** the means for the selection of the respective glass and/or recycling glass piece comprises at least one compressed-air nozzle for the selection of the respective glass and/or recycling glass piece by means of a compressed-air pulse.

14. An apparatus according to one of the claims 11 to 13, **characterized in that** the means for guiding the individual glass and/or recycling glass pieces to the selection unit comprise a funnel and a bulk-material ramp, so that the individual glass pieces lead to a glass stream in free fall which reaches the selection unit.

15. An apparatus according to one of the claims 11 to 14, **characterized in that** the apparatus further comprises a color sorting device.

16. An apparatus according to claim 15, **characterized in that** the color sorting device comprises a fluorescent tube as a light source and the means for the excitation of the individual glass and/or recycling glass pieces comprises an ultraviolet lamp.

17. An apparatus according to one of the claims 11 to 16, **characterized in that** the sensor system comprises a space-resolved CCD camera.

18. An apparatus according to one of the claims 11 to 17, **characterized in that** the apparatus comprises means for suppressing stray light.

19. An apparatus according to claim 18, **characterized in that** the means for suppressing stray light comprises a photochopper devices and/or enclosures.

## Revendications

1. Procédé de sélection de morceaux de verre et/ou de verre recyclé ayant les caractéristiques suivantes :
1.1 guidage des différents morceaux de verre et/ou de verre recyclé dans une unité de sélection,
1.2 excitation des différents morceaux de verre et/ou de verre recyclé au moyen d'un rayonnement électromagnétique dans la plage de longueur d'ondes comprise entre l'ultraviolet et l'infrarouge, l'excitation étant réalisée à au moins une longueur d'ondes donnée ou dans une plage de longueurs d'ondes donnée caractéristique d'un type de verre ou de composants de verres donnés,
1.3 détection du rayonnement émis par les différents morceaux de verre et/ou de verre recyclé caractéristique de types de verres ou composants de verres donnés au moyen d'un système de capteurs optiques ou optoélectroniques,
1.4 détermination, à partir du rayonnement de fluorescence émis, du type de verre ou du composant de chaque morceau de verre et/ou de verre recyclé et
1.5 sélection du morceau de verre et/ou de verre recyclé correspondant, le système de capteurs se composant d'au moins deux filtres d'émission ayant un spectre différent avec des capteurs mesurant l'intensité lumineuse associés à chacun,
1.6.1 dans lequel une sélection des morceaux de verre et/ou de verre recyclé en vitrocéramiques et autres verres, tels que les verres flottés et verres de bouteilles, est effectuée et l'excitation en fluorescence est réalisée à l'une des longueurs d'ondes : 450 nm ± 10 nm, 340 nm ± 10 nm ou 380 nm ± 10 nm
ou
1.6.2 dans lequel une sélection des morceaux de verre et/ou de verre recyclé en verres au plomb, vitrocéramiques, verres au bore tels que les verres aluminoborosilicates et/ou autres verres, tels que les verres flottés et verres de bouteilles, est effectuée et l'excitation en fluorescence est réalisée dans une plage de 400 à 450 nm ± 10 nm et la détection entre 530 et 700 nm ± 10 nm.

2. Procédé selon la revendication 1, **caractérisé en ce que** l'excitation est réalisée à au moins deux longueurs d'ondes ou plages de longueurs d'ondes de spectre différent qui sont caractéristiques d'un type de verre ou de composants de verres donnés.

3. Procédé selon l'une au moins des revendications 1 à 2, **caractérisé en ce que** l'excitation des différents morceaux de verre et/ou de verre recyclé est réalisée au moyen d'un rayonnement sensiblement monochromatique.

4. Procédé selon l'une au moins des revendications 1 à 3, **caractérisé en ce que** l'excitation est réalisée par une source de lumière UV permanente, en particulier par au moins deux filtres ayant un spectre différents.

5. Procédé selon l'une au moins des revendications 1 à 3, **caractérisé en ce que** l'excitation est réalisée par un laser, en particulier un laser UV.

6. Procédé selon la revendication 5, **caractérisé en ce que** l'excitation est réalisée par un laser pulsé.

7. Procédé selon l'une des revendications 1 à 6, **caractérisé en ce que** l'analyse du signal des capteurs et la sélection du morceau de verre recyclé correspondant sont automatiques.

8. Procédé selon l'une des revendications 1 à 7, **caractérisé en ce que** l'excitation et/ou l'émission sont réalisées au moyen de longueurs d'ondes différentes, coupées les unes par rapport aux autres.

9. Procédé selon l'une au moins des revendications 1 à 8, **caractérisé en ce que** les différents morceaux de verre et/ou de verre recyclé sont guidés dans une unité de sélection sous la forme d'un courant de matière formant sensiblement une seule couche.

10. Procédé selon l'une au moins des revendications 1 à 9, **caractérisé en ce que caractérisé en ce que** la sélection des différents morceaux de verre et/ou de verre recyclé est effectuée au moyen d'impulsions d'air comprimé.

11. Dispositif de sélection de morceaux de verre et/ou de verre recyclé ayant les caractéristiques suivantes :
11.1 des moyens pour amener les différents morceaux de verre et/ou de verre recyclé dans une unité de sélection ;
11.2 des moyens pour exciter les différents morceaux de verre et/ou de verre recyclé au moyen d'un rayonnement électromagnétique dans une plage de longueurs d'ondes comprise entre l'ultraviolet et l'infrarouge, l'excitation étant réalisée à au moins une longueur d'ondes donnée ou dans une plage de longueurs d'ondes donnée, caractéristique d'un type de verre ou de composants de verres donnés,
11.3 un système de détecteurs optique ou optoélectronique pour la détection et l'analyse du rayonnement émis par les différents morceaux de verre et/ou de verre recyclé et caractéristique d'un type de verre ou d'un composé de chaque morceau de verre recyclé,
11.4 des moyens pour la sélection de chaque morceau de verre et/ou de verre recyclé, le système de capteurs se composant d'au moins deux filtres d'émission de spectre différent avec des capteurs mesurant l'intensité lumineuse associés à chacun,
11.5.1 dans lequel une sélection des morceaux de verre et/ou de verre recyclé en vitrocéramiques et autres verres, tels que les verres flottés et verres de bouteilles, est effectuée et l'excitation en fluorescence est réalisée à l'une des longueurs d'ondes : 450 nm ± 10 nm, 340 nm ± 10 nm ou 380 nm ± 10 nm
ou
11.5.2 dans lequel une sélection des morceaux de verre et/ou de verre recyclé en verres au plomb, vitrocéramiques, verres au bore tels que les verres aluminoborosilicates et/ou autres verres, tels que les verres flottés et verres de bouteilles, est effectuée et l'excitation en fluorescence est réalisée dans une plage de 400 à 450 nm ± 10 nm et la détection entre 530 et 700 nm ± 10 nm.

12. Dispositif selon la revendication 11, **caractérisé en ce que** le dispositif comprend des moyens pour une excitation à au moins deux longueurs d'ondes ou plages de longueurs d'ondes de spectre différent caractéristiques d'un type de verre donné.

13. Dispositif selon la revendication 11 ou 12, **caractérisé en ce que** les moyens de sélection de chaque morceau de verre et/ou de verre recyclé comprennent au moins une buse à air comprimé pour sélectionner chaque morceau de verre et/ou de verre recyclé au moyen d'une impulsion d'air comprimé.

14. Dispositif selon l'une des revendications 11 à 13, **caractérisé en ce que** les moyens pour amener les différents morceaux de verre et/ou de verre recyclé dans l'unité de sélection comprennent une trémie et une rampe à matériaux en vrac, de sorte que les différents morceaux de verre donnent un flux de verre en chute libre qui parvient dans l'unité de sélection.

15. Dispositif selon l'une des revendications 11 à 14, **caractérisé en ce que** le dispositif comprend en outre un dispositif de tri par couleur.

16. Dispositif selon la revendication 15, **caractérisé en ce que** le dispositif de tri par couleur comprend un tube fluorescent servant de lampe et les moyens pour exciter certains morceaux de verre et/ou de verre recyclé comprennent une lampe à UV.

17. Dispositif selon l'une des revendications 11 à 16, **caractérisé en ce que** le système de capteurs comprend une caméra CCD à résolution locale.

18. Dispositif selon l'une des revendications 11 à 17, **caractérisé en ce que** le dispositif comprend des moyens pour supprimer la lumière parasite.

19. Dispositif selon la revendication 18, **caractérisé en ce que** les moyens pour supprimer la lumière parasite comprennent des dispositifs de hachage de la lumière et/ou des capots.
